# EUROPEAN PATENT SPECIFICATION

(11) **EP 3 184 358 B1**
(45) Date of publication and mention of the grant of the patent: **07.11.2018**
(21) Application number: 16205588.3
(22) Date of filing: 21.12.2016
(51) Int. Cl.: B60N 2/64, B60N 2/70

(54) **UPHOLSTERY FOR A VEHICLE SEAT**
POLSTER FÜR EINEN FAHRZEUGSITZ
CAPITONNAGE POUR UN SIÈGE DE VÉHICULE

(30) Priority: 21.12.2015 IT UB20159735
(43) Date of publication of application: 28.06.2017
(73) Proprietor: AUNDE ITALIA S.p.A., 10046 Poirino (TO) (IT)
(72) Inventor: COPPOLA, Antonio, 10023 Chieri (Torino) (IT); DANIELE, Rossano, 10095 Grugliasco (Torino) (IT)
(74) Representative: Fioravanti, Corrado

(56) References cited:
- EP-A1- 2 883 742
- US-A1- 2013 134 754

## Description

### Technical sector

The present invention pertains, in general, to the field of upholstery for vehicles such as automobiles, commercial or industrial vehicles; in particular, the invention relates to a detachable insert, applicable to the upholstery of vehicle seats, and to a process for the manufacture thereof.

### Prior Art

Traditionally, a vehicle seat (for example in the automotive field and in commercial or industrial shipping) is upholstered with a cover (usually in fabric or leather), which is usually fixed to the seat structure by means of plastic profiles or specific hooks.

Such a solution, however, is rather inflexible with regard to the possibility of customizing the cover without having to radically change the cover itself.

For example, one generally wants a particular car model or commercial or industrial vehicle to allow a certain degree of customization of the interior, thus requiring different types of covers, which display, for example, trademarks, logos, patterns, colors, or rather have different shapes, volumes and profiles.

With a traditional-type cover, the production process must be arranged so as to obtain different product lines, depending on the desired features. Every cover must possess all the pre-set features, and therefore a cover with different features cannot be applied to the same vehicle.

Also, from the point of view of maintenance, a traditional cover should normally be replaced as a whole, even in the case of partial damage.

Such limitations, understandably, imply higher costs and burdens, both in the production phase of the covers, and during assembly and subsequent maintenance.

Document US2013/134754A1 discloses a seat and a process to produce such a seat, wherein the seat comprises a removable insert for upholstering the seat, the removable insert having a first hook-and-loop fastening means adapted to coupling with a lining applicable to the seat.

### Summary of the invention

One object of the present invention is to remedy the aforementioned problems.

To achieve this result, an upholstery for the seat of a vehicle (car, commercial and industrial vehicles, etc.), according to the present invention, is proposed, as defined in claim 1.

More specifically, these inserts have a gripping surface which, coming into contact with a surface of the cover secured to the seat, generate a hook-and-loop fastening force. To strengthen even more the connection between the cover and insert, zippers or other connecting members may be provided.

The insert can therefore be applied to the seat of a specific vehicle, without requiring the entire cover to reproduce the aesthetic features that are to be conferred to the seat itself.

In other words, a seat equipped with a removable insert, according to the present invention, does not need a specially dedicated cover, ensuring in this way a high degree of flexibility, since different inserts may be applied with the further possibility of combining them or replacing them easily (also in case of wear and/or damage). Accordingly, the entire production process is streamlined.

It will therefore be possible to manufacture a single cover that fits all of the various vehicle seats, providing that to each is dedicated a specific insert having the desired features. All this is to the benefit of flexibility in production and in the design of vehicle interiors, thus ensuring a high degree of customization.

The aforementioned and other objects and advantages are achieved, according to an aspect of the invention, by an insert for vehicle seats and by a manufacturing process having the features defined in the appended claims. Preferred embodiments of the invention are defined in the dependent claims.

### Brief description of drawings

Functional and structural features of some preferred embodiments for an insert for seats and of a manufacturing process according to the invention will now be described. Reference is made to the appended drawings, in which:
- Figure 1 is a schematic perspective view of a seat for an automobile comprising a cover and a removable insert according to an embodiment of the present invention;

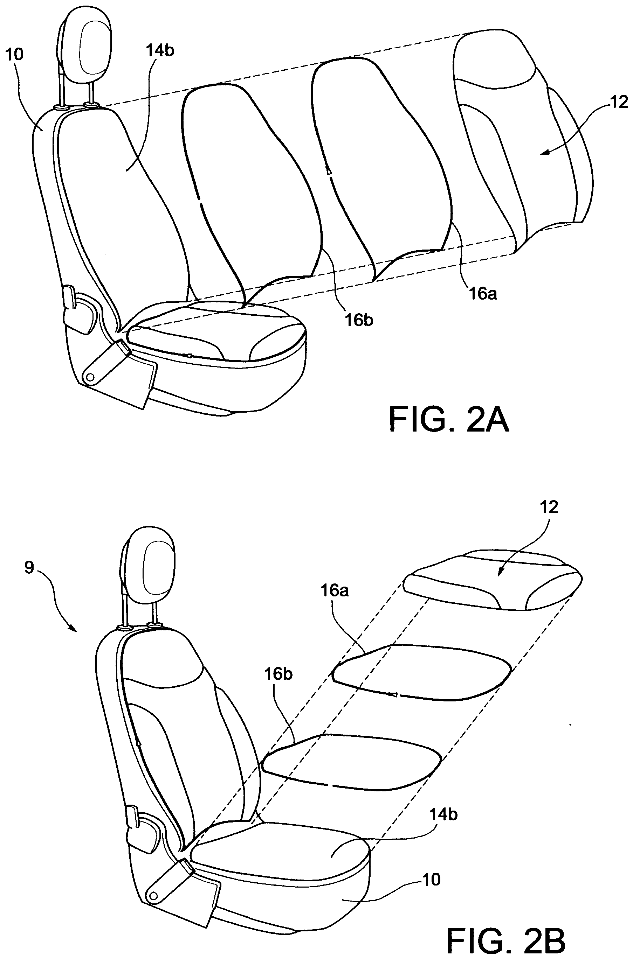

- Figures 2A and 2B are two schematic perspective views of an exploded drawing of the seat of figure 1, showing some of the components of the removable insert according to an embodiment of the present invention;

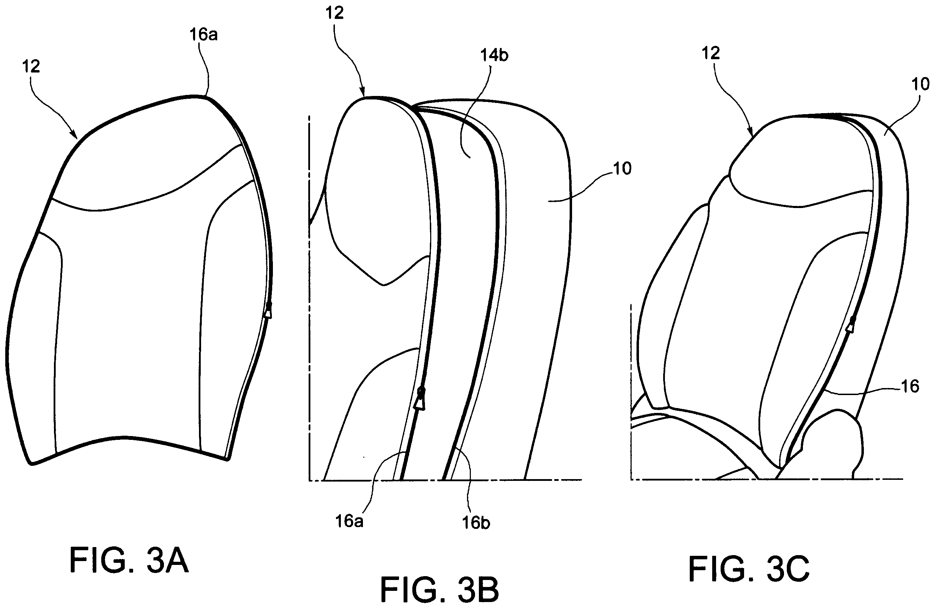

- Figures 3A to 3C are schematic perspective views respectively of a removable insert for a seat back, of the steps approaching the removable insert of figure 3A to the seat back, and of the application and attachment of the removable insert to the seat back and to the cover, according to one embodiment of the present invention;

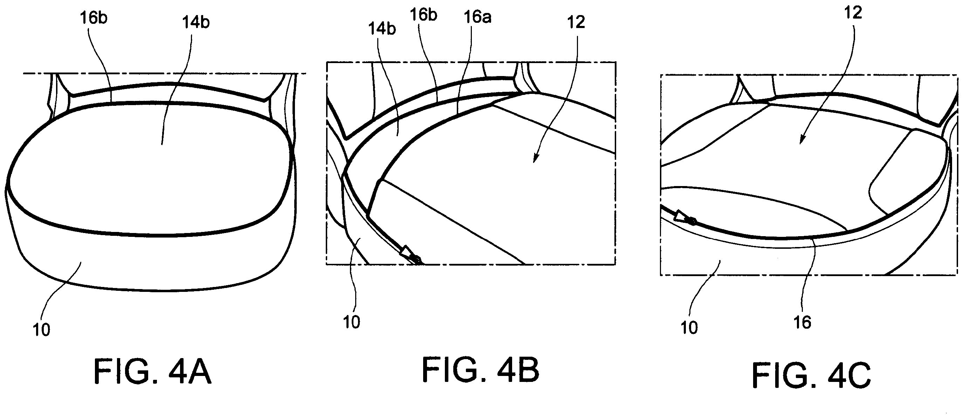

- Figures 4A to 4C are schematic perspective views respectively of a removable insert for a seat back of the steps of approaching the removable insert of figure 4A to the seat base and of the application and attachment of the removable insert to the base of the seat and to the cover, according to one embodiment of the present invention;

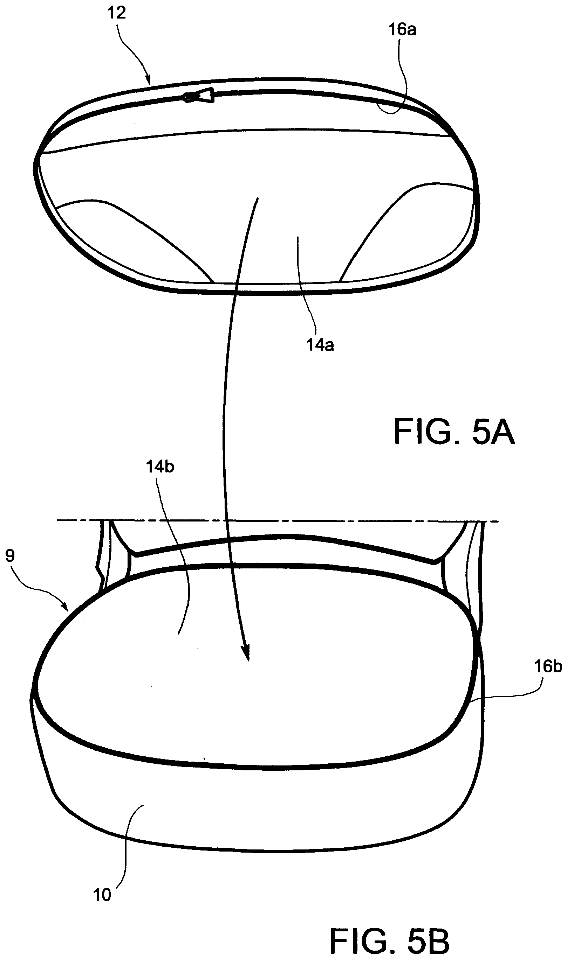

- figures 5A and 5B illustrate respectively a bottom face of a removable insert and a gripping surface in the base of the seat, showing the surfaces that will be in contact in the subsequent step in the assembly of the upholstery; and

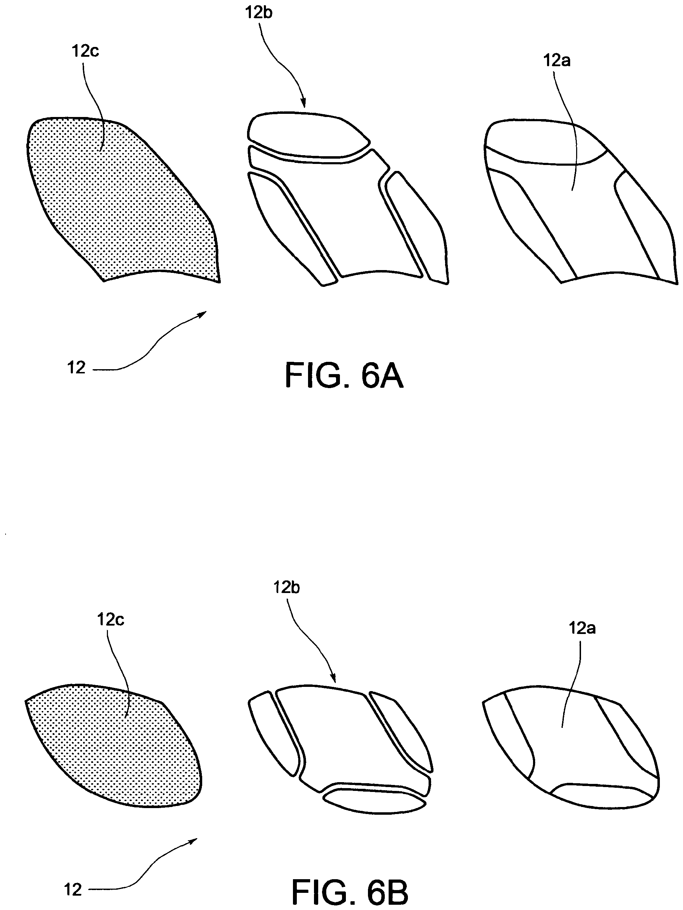

- figures 6A and 6B are schematic exploded views of a removable insert, intended respectively to upholster the back and the base of an automotive seat, according to one embodiment of the present invention.

### Detailed Description

Before explaining in detail a plurality of embodiments of the invention, it should be clarified that the invention is not limited in its application to the details of construction and to the configuration of the components provided in the following description or illustrated in the drawings. The invention may assume other embodiments and may be implemented or achieved in essentially different ways within the scope defined by the claims. It should also be understood that the phraseology and terminology have descriptive purposes and should not be construed as limiting.

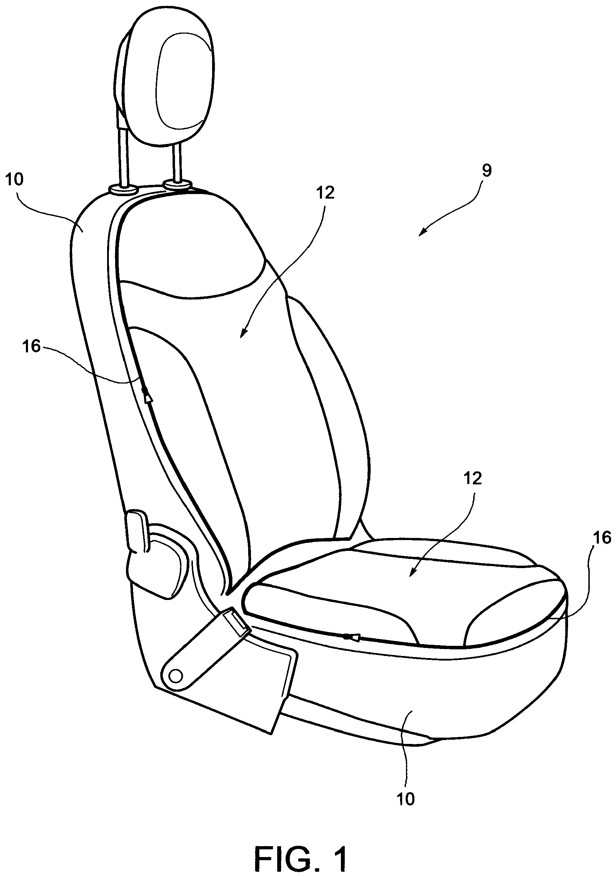

Referring initially to figure 1, one or more removable inserts 12 for the upholstery of a seat 9 of a vehicle have a first hook-and-loop fastening means 14a with which it is possible to couple removably these inserts 12 to a cover 10, which advantageously does not require direct anchoring on the padding by, for example, rods, non-woven fabric seams or coextruded profiles and Spenax hooks. This cover may be attached to the padding also by solely plastic perimeter profiles, which keep it in position, and can be fitted on the structure of the seat 9. On this cover, removable parts can subsequently be applied that determine the shape and final appearance of the seat.

Advantageously, the first hook-and-loop fastening means 14a can be a hooked fabric (for example, Velcro type) or other suitable element, which can be used to upholster a bottom surface of the insert 12, intended to be placed in contact with the cover 10.

The insert 12 is fully customizable, and can reproduce the features of color, ergonomics, aesthetics, etc. that one wishes to give to the specific vehicle interior.

Advantageously, the cover 10 will have a second hook-and-loop fastening means 14b, at least partially complementary to the first 14a, to form a removable coupling between the cover 10 and the insert 12. The second hook-and-loop fastening means 14b may be, according to one embodiment of the invention, of a non-woven, needle-punched, velour fabric.

The removable insert may further comprise a first snap and/or zipper fastening means 16a, by which the removable insert 12 may be coupled to the cover 10. Similarly, the cover 10 may have second snap and/or zipper fastening means 16b, at least in part complementary to the first 16a. In the illustrated example, there are zipper-type (visible or hidden) fastening means 16, but other types known to those skilled in the art (such as buttons, hooks, buckles, etc.) may be considered, herein generically defined with the expression "snap fastening means".

The removable insert 12 comprises three layers 12a, 12b, 12c.

More specifically, according to one preferred embodiment of the present invention, the insert 12 comprises a first surface layer 12a of upholstery (for example, in fabric, leather, velour or synthetic material), a second layer 12b comprising one or more polyurethane sheets, and a third layer 12c comprising the first hook-and-loop fastening means 14a, for example, in the form of a gripping surface.

On one or more of the above layers 12a, 12b, 12c a microperforated polyurethane film adhesive can be applied to allow the breathability of the material. The polyurethane sheets may also have differentiated features such as shape, thickness, texture, etc. to define the specific aesthetic form provided by the design of the seat 9.

The layers 12a, 12b, 12c of the insert 12 will be preferably assembled by welding and/or thermoforming.

In addition, microperforated polyurethane film adhesive is advantageously applied to the layers 12a, 12b, 12c by means of hot-pressing plates.

Once the insert 12 is made, it can be applied to the cover 10 through a hook-and-loop fastening means.

The advantage achieved is therefore in having a flexible, economic and simple solution for customizing the interior of a vehicle.

Various aspects and embodiments of an insert for seats and a manufacturing process according to the invention have been described. It is intended that each embodiment may be combined with any other embodiment. The invention, moreover, is not limited to the described embodiments, but may be varied within the scope defined by the appended claims.

## Claims

1. A removable insert (12) for upholstering a vehicle seat (9), said removable insert (12) having a first hook-and-loop fastening means (14a) adapted to coupling the removable insert (12) with a cover (10) applicable to said seat, **characterized in that** the removable insert (12) comprises three layers (12a, 12b, 12c), different from one another.

2. An insert according to claim 1, wherein the removable insert (12) also comprises snap and/or zipper fastening means (16a), adapted to removably couple the removable insert (12) to said cover (10).

3. An insert according to claim 1 or 2, comprising a first upholstery surface layer (12a), a second layer (12b) comprising one or more polyurethane sheets, and a third layer (12c) comprising a gripping surface.

4. An insert according to any one of the preceding claims, wherein one or more of the layers (12a, 12b, 12c) are treated by application of a microperforated adhesive polyurethane film.

5. A process for manufacturing a removable insert (12) for upholstering a vehicle seat, comprising the step of applying to said removable insert (12) a first hook-and-loop fastening means (14a) adapted to couple the removable insert (12) to a cover (10) applicable to said seat, and further comprising the step of assembling one after another, by welding and/or thermoforming, a first upholstery surface layer (12a), a second layer (12b) comprising one or more polyurethane sheets, and a third layer (12c) comprising a gripping surface.

6. A process according to claim 5, comprising the step of applying to the removable insert (12) a snap and/or zipper fastening means (16a), adapted to removably couple the removable insert (12) to said cover (10).

7. Process according to claim 5 or 6, comprising the step of applying, by means of hot-pressing plates, a microperforated adhesive polyurethane film to one or more of the layers (12a, 12b, 12c) of the removable insert (12).

8. A cover (10) for a vehicle seat, to which is applicable a removable insert (12) according to any one of the preceding claims.

9. A cover according to claim 8, comprising a second hook-and-loop fastening means (14b), at least partially complementary to the first hook-and-loop fastening means (14a) of the removable insert (12).

## Patentansprüche

1. Abnehmbarer Einsatz (12) zum Polstern eines Fahrzeugsitzes (9), wobei der abnehmbare Einsatz (12) ein erstes Flächenreißverschlussmittel (14a) aufweist, das zum Koppeln des abnehmbaren Einsatzes (12) mit einem für den Sitz verwendbaren Bezug (10) ausgestaltet ist, **dadurch gekennzeichnet, dass** der abnehmbare Einsatz (12) drei voneinander verschiedene Lagen (12a, 12b, 12c) aufweist.

2. Einsatz gemäß Anspruch 1, wobei der abnehmbare Einsatz (12) auch zum lösbaren Verbinden des abnehmbaren Einsatzes (12) mit dem Bezug (10) ausgelegte Schnapp- und/oder Reißverschlussmittel (16a) aufweist.

3. Einsatz gemäß Anspruch 1 oder 2, aufweisend eine erste Polsteroberflächenlage (12a), eine eine oder mehrere Polyurethanbahnen aufweisende zweite Lage (12b) und eine eine Greifoberfläche aufweisende dritte Lage (12c).

4. Einsatz gemäß einem der vorangegangenen Ansprüche, wobei eine oder mehrere der Lagen (12a, 12b, 12c) durch Auftragen eines mikroperforierten adhesiven Polyurethanfilms behandelt sind.

5. Verfahren zum Herstellen eines abnehmbaren Einsatzes (12) zum Polstern eines Fahrzeugsitzes, aufweisend den Schritt des Anbringens eines zum Koppeln des abnehmbaren Einsatzes (12) mit einem für den Sitz verwendbaren Bezugs ausgestalteten ersten Flächenreißverschlussmittels (14a) an dem abnehmbaren Einsatz (12), und das weiter den Schritt des aufeinanderfolgenden Zusammensetzens einer ersten Polsteroberflächenlage (12a), einer eine oder mehrere Polyurethanbahnen aufweisenden zweiten Lage (12b) und einer eine Greifoberfläche aufweisenden dritten Lage (12c) durch Schweißen und/oder Thermoformen aufweist.

6. Verfahren gemäß Anspruch 5, aufweisend den Schritt des Anbringens eines zum lösbaren Verbinden des abnehmbaren Einsatzes (12) mit dem Bezug (10) ausgelegten Schnapp- und/oder Reißverschlussmittels (16a).

7. Verfahren gemäß Anspruch 5 oder 6, aufweisend den Schritt des Auftragens eines mikroperforierten adhesiven Polyurethanfilms auf eine oder mehrere der Lagen (12a, 12b, 12c) des abnehmbaren Einsatzes (12) durch Heizpressplatten.

8. Bezug (10) für einen Fahrzeugsitz, für den ein abnehmbarer Einsatz (12) gemäß einem der vorangehenden Ansprüche verwendbar ist.

9. Bezug gemäß Anspruch 8, aufweisend ein zweites Flächenreißverschlussmittel (14b), das zumindest teilweise komplementär zu dem ersten Flächenreißverschlussmittel (14a) des abnehmbaren Einsatzes (12) ist.

## Revendications

1. Insert amovible (12) pour le capitonnage d'un siège de véhicule (9), ledit insert amovible (12) ayant un premier moyen de fermeture autoagrippante (14a) adapté pour coupler l'insert amovible (12) avec une housse (10) applicable audit siège, **caractérisé en ce que** l'insert amovible (12) comprend trois couches (12a, 12b, 12c), différentes les unes des autres.

2. Insert selon la revendication 1, dans lequel l'insert amovible (12) comprend également un moyen de fermeture à pression et/ou à glissière (16a), adapté pour coupler de manière amovible l'insert amovible (12) à ladite housse (10).

3. Insert selon la revendication 1 ou 2, comprenant une première couche de surface de capitonnage (12a), une seconde couche (12b) comprenant une ou plusieurs feuilles de polyuréthanne, et une troisième couche (12c) comprenant une surface agrippante.

4. Insert selon l'une quelconque des revendications précédentes, dans lequel une ou plusieurs des couches (12a, 12b, 12c) sont traitées par application d'un film en polyuréthanne adhésif microperforé.

5. Procédé pour la fabrication d'un insert amovible (12) pour le capitonnage d'un siège de véhicule, comprenant l'étape consistant à appliquer audit insert amovible (12) un premier moyen de fermeture autoagrippante (14a) adapté pour coupler l'insert amovible (12) à une housse (10) applicable audit siège, et comprenant en outre l'étape consistant à assembler l'une après l'autre, par soudage et/ou thermoformage, une première couche de surface de capitonnage (12a), une seconde couche (12b) comprenant une ou plusieurs feuilles de polyuréthanne, et une troisième couche (12c) comprenant une surface agrippante.

6. Procédé selon la revendication 5, comprenant l'étape consistant à appliquer à l'insert amovible (12) un moyen de fermeture à pression et/ou à glissière (16a), adapté pour coupler de manière amovible l'insert amovible (12) à ladite housse (10).

7. Procédé selon la revendication 5 ou 6, comprenant l'étape consistant à appliquer, au moyen de plaques de presse à chaud, un film en polyuréthanne adhésif microperforé à une ou plusieurs couches (12a, 12b, 12c) de l'insert amovible (12).

8. Housse (10) pour un siège de véhicule, à laquelle s'applique un insert amovible (12) selon l'une quelconque des revendications précédentes.

9. Housse selon la revendication 8, comprenant un second moyen de fermeture autoagrippante (14b), au moins partiellement complémentaire au premier moyen de fermeture autoagrippante (14a) de l'insert amovible (12).
